# EUROPÄISCHE PATENTSCHRIFT

(11) **EP 2 960 416 B1**
(45) Veröffentlichungstag und Bekanntmachung des Hinweises auf die Patenterteilung: **31.10.2018**
(21) Anmeldenummer: 15173239.3
(22) Anmeldetag: 23.06.2015
(51) Int. Cl.: E05F 3/12

(54) **REGULIERVENTIL**
CONTROL VALVE
SOUPAPE DE RÉGLAGE

(30) Priorität: 24.06.2014 DE 102014212110
(43) Veröffentlichungstag der Anmeldung: 30.12.2015
(73) Patentinhaber: GEZE GmbH, 71229 Leonberg (DE)
(72) Erfinder: Wörner, Benjamin, 71229 Leonberg (DE)

(56) Entgegenhaltungen:
- EP-A2- 0 889 190
- EP-A2- 2 607 760
- DE-A1-102007 013 377

## Beschreibung

Die vorliegende Erfindung betrifft ein Regulierventil für einen Antrieb insbesondere einer Tür oder eines Fensters, mit einem aus Kunststoff bestehenden Ventilkörper und einem Ventilkopf, der mit einer Werkzeugaufnahme für ein Werkzeug versehen ist.
Antriebe für Türen oder Fenster sind allgemein bekannt und können als manuelle oder automatische Antriebe ausgeführt sein. In bekannter Weise umfasst ein derartiger Antrieb ein Gehäuse mit einer Bohrung, in der ein Arbeitskolben angeordnet ist, der mit einer Abtriebswelle getriebemäßig zusammenwirkt. Auf der Abtriebswelle kann ein Gestänge oder ein Gleitarm drehfest angeordnet sein. Der Antrieb kann wahlweise an einem Flügel der Tür oder des Fensters oder an deren Umrahmung angeordnet sein. Entsprechend stützt sich das Gestänge oder der Gleitarm am Rahmen oder dem Flügel ab, wodurch eine Verbindung zwischen der Schwenkbewegung des Flügels und dem Antrieb bewirkt wird.
In dem mit einer Hydraulikflüssigkeit gefüllten Gehäuse ist zudem eine Feder angeordnet, die bei einer Drehbewegung der Abtriebswelle beim manuellen oder beispielsweise durch eine Hydraulikpumpe bewirkten automatischen Öffnen des Flügels durch Verschieben des Arbeitskolbens komprimiert wird und als Energiespeicher zum selbsttätigen Schließen des Flügels dient. Der Innenraum des Gehäuses ist durch den Kolben in mehrere Räume aufgeteilt. Zwischen diesen Räumen sind Hydraulikkanäle mit zugeordneten Regulierventilen zur Beeinflussung des Überströmens angeordnet, die der Steuerung des Antriebsverhaltens dienen.
Dabei sind die Regulierventile jeweils in einer mit einem Gewinde versehenen Bohrung im Gehäuse des Antriebs angeordnet und werden durch Drehen eingestellt, wodurch ein beispielsweise in Form eines Ventilkegels oder dergleichen vorgesehenes Ventilglied des Ventils relativ zu einem in dem Hydraulikkanal angeordneten Ventilsitz verlagert wird und so den Hydraulikkanal mehr oder weniger weit öffnet bzw. schließt.
Regulierventile der eingangs genannten Art werden zunehmend auch aus Kunststoff gefertigt, wobei Kunststoffregulierventile eine günstige Alternative zu Messing- oder Stahlventilen darstellen.
Durch eine Herstellung aus Kunststoff nach dem Spritzgussverfahren lassen sich nun zwar Regulierventile in hohen Stückzahlen günstig produzieren. Kunststoff ist jedoch in der Regel nicht hinreichend widerstandsfähig gegenüber einer mechanischen Betätigung mittels eines Schraubendrehers oder dergleichen. Insbesondere bei einer Werkzeugaufnahme des Ventilkopfes in Form eines sogenannten Phillips-Kreuzschlitzes mit sich zum Ventilglied hin verjüngenden Flanken tritt aufgrund der keilförmigen Schlitzform beim festen Anziehen der Schraube eine Axialkraft auf, die die Spitze des Schraubendrehers aus dem Schraubenkopf heraustreibt. Durch dieses Heraustreiben kann nun aber insbesondere ein Kunststoffkreuzschlitz stark beschädigt werden, was das betreffende Regulierventil unbrauchbar macht und hohe Kosten für den Austausch des jeweiligen Antriebs mit sich bringt.
In der EP 2 607 760 A2 weist der Ventilkopf mit der Werkzeugaufnahme eines Ventils keine mehrere, sich jeweils radial und radial erstreckende Flanken auf, durch welche sich eine verbesserte feste Verbindung im restlichen aus Kunststoff bestehenden Ventilkörper ergibt. Hier schmilzt der Energierichtungsgeber (Spitze oder Steg) beim Ultraschallschweißen.
Aus der DE 10 2007 013 377 A1 ist ein Regulierventil bekannt, bei dem der Ventilkopf und der Regulierbereich formschlüssig miteinander verbunden sind. Dieses Dokument weist die Merkmale des Oberbegriffs des Anspruchs 1 auf.

Der Erfindung liegt die Aufgabe zugrunde, ein verbessertes Regulierventil der eingangs genannten Art anzugeben, bei dem die zuvor erwähnten Nachteile beseitigt sind. Dabei soll das Regulierventil insbesondere einfach und kostengünstig herstellbar sowie bei reduzierter Gefahr einer Beschädigung einfach handhabbar sein.

Erfindungsgemäß wird diese Aufgabe gelöst durch ein Regulierventil mit den Merkmalen des Anspruchs 1. Bevorzugte Ausführungsformen des erfindungsgemäßen Regulierventils sind in den Unteransprüchen angegeben.
Das erfindungsgemäße Regulierventil zeichnet sich dadurch aus, dass der die Werkzeugaufnahme umfassende Ventilkopf durch einen mit dem Ventilkörper fest verbundenen, aus Metall bestehenden Ventileinsatz gebildet ist.

Es genügt somit, den die Werkzeugaufnahme umfassenden Ventilkopf aus einem widerstandsfähigeren Material zu fertigen, das einer Betätigung durch ein jeweiliges Werkzeug wie insbesondere einen Schraubendreher oder dergleichen Stand hält. Der restliche Ventilkörper ist aus Kunststoff insbesondere nach dem Spritzgussverfahren hergestellt, wodurch die Herstellungskosten entsprechend gering gehalten werden. Mit dem aus Metall bestehenden Ventileinsatz und der entsprechend widerstandsfähigeren Werkzeugaufnahme ergibt sich dennoch insgesamt ein äußerst robuster Aufbau und ein entsprechend höherer Bedienkomfort. Mit entsprechend robusteren Regulierventilen entfallen insbesondere auch die Kosten, die bisher dadurch entstanden sind, dass die betreffenden Tür- oder Fensterantriebe aufgrund eines Verschleißes der Regulierventile vorzeitig ausgetauscht werden mussten.

Der Ventileinsatz besteht aus Metall und insbesondere aus Stahl.

Zur sicheren Verankerung in dem Ventilkörper umfasst der Ventileinsatz einen mit dem Ventilkopf verbundenen, sich in den Ventilkörper hinein erstreckenden axialen Fortsatz.

Dabei umfasst dieser axiale Fortsatz mehrere sich jeweils axial und radial erstreckende Flanken. Bevorzugt sind die Flanken kreuzförmig angeordnet.
Von Vorteil ist insbesondere auch, wenn sich die Flanken axial zum Ventilkopf und/oder radial zur Mittelachse des Regulierventils hin verjüngen. Gemäß einer bevorzugten praktischen Ausführungsform des erfindungsgemäßen Regulierventils sind die Flanken an ihrem radial äußeren Rand jeweils mit einer Flankenstruktur versehen. Dabei kann eine jeweilige Flanke zur Bildung der Flankenstruktur an ihrem äußeren radialen Rand beispielsweise mit einer Mehrzahl von Aussparungen versehen sein.

Mit den Flanken ergibt sich eine verbesserte feste Verbindung im restlichen aus Kunststoff bestehenden Ventilkörper.

Der Ventileinsatz kann insbesondere durch Klebung, Umspritzen, Verschweißen, Verrasten und/oder dergleichen mit dem Ventilkörper verbunden sein. Bei einer Herstellung des Ventilkörpers aus Kunststoff nach dem Spritzgussverfahren kann dieser Ventilkörper direkt um den Ventileinsatz gespritzt werden.
Bevorzugt wird zumindest der Ventileinsatz nach dem Fließpressverfahren hergestellt.
Die Erfindung wird im Folgenden anhand eines Ausführungsbeispiels unter Bezugnahme auf die Zeichnung näher erläutert; in dieser zeigen:
- Fig. 1: eine schematische Darstellung einer beispielhaften Ausführungsform eines erfindungsgemäßen Regulierventils,
- Fig. 2: eine schematische, teilweise geschnittene Darstellung des Regulierventils gemäß Fig. 1,
- Fig. 3: eine schematische Darstellung des Ventileinsatzes einer weiteren beispielhaften Ausführungsform des Regulierventils und
- Fig. 4: eine schematische Darstellung des in eine Bohrung eines Antriebsgehäuses eingebrachten Regulierventils gemäß Fig. 1.

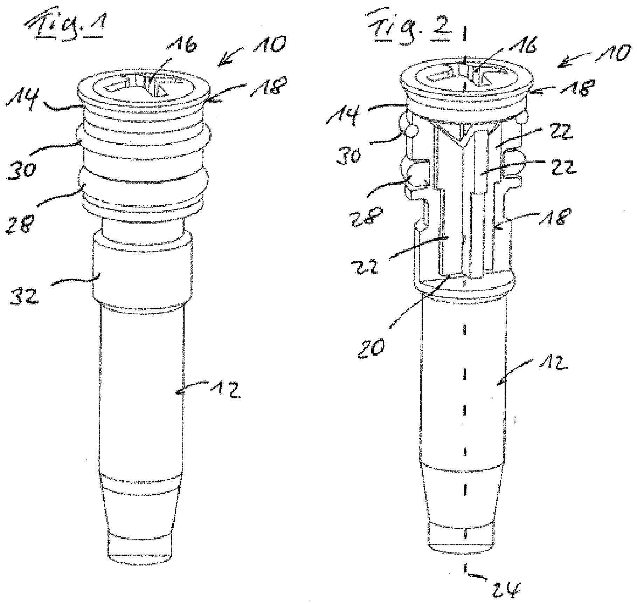

Fig. 1 zeigt in schematischer Darstellung eine beispielhafte Ausführungsform eines erfindungsgemäßen Regulierventils 10 für einen Antrieb einer Tür oder eines Fensters mit einem als Spritzgussteil aus Kunststoff hergestellten Ventilkörper 12 und einem Ventilkopf 14, der mit einer Werkzeugaufnahme 16 für ein Werkzeug wie beispielsweise einen Schraubendreher oder dergleichen versehen ist.
Der die Werkzeugaufnahme 16 umfassende Ventilkopf 14 ist durch einen mit dem Ventilkörper 12 fest verbundenen Ventileinsatz 18 gebildet, der aus Metall, insbesondere Stahl, besteht.

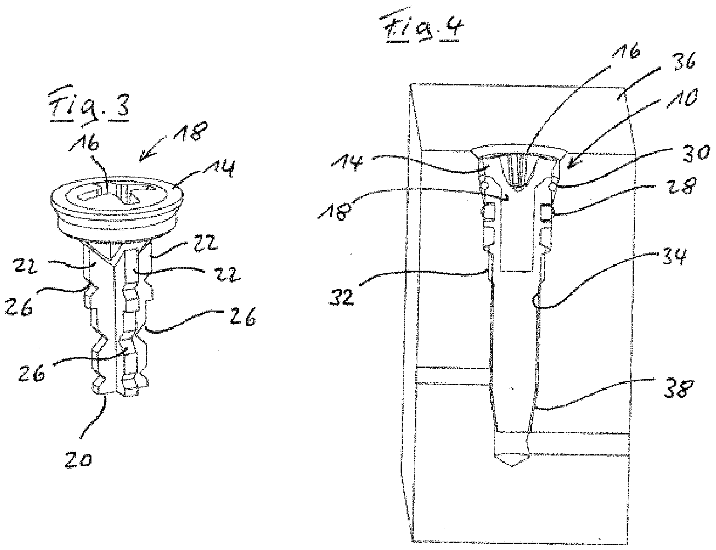

Wie insbesondere anhand der Fig. 2 und 3 zu erkennen ist, umfasst der Ventileinsatz 18 einen mit dem Ventilkopf 14 verbundenen, sich in den Ventilkörper 12 hinein erstreckenden axialen Fortsatz 20. Dabei zeigt Fig. 2 das Regulierventil 10 gemäß Fig. 1 nochmals in einer teilweise geschnittenen Darstellung. In Fig. 3 ist allein der den Ventilkopf 14 mit der Werkzeugaufnahme 16 umfassende Ventileinsatz 18 dargestellt, der hier jedoch eine gegenüber der Darstellung in der Fig. 2 abgewandelte Form besitzt.

Der axiale Fortsatz 20 des Ventileinsatzes 18 umfasst mehrere sich jeweils axial und radial erstreckende Flanken 22, die, wie dargestellt, insbesondere kreuzförmig angeordnet sein können. Die Flanken 22 können sich axial zum Ventilkopf 14 oder radial zur Mittelachse 24 des Regulierventils 10 hin verjüngen. Es sind jedoch beispielsweise auch solche Ausführungen denkbar, bei denen sich die Flanken 22 axial vom Ventilkopf 14 oder von der Mittelachse 24 des Regulierventils 10 weg verjüngen.

Bei dem in Fig. 3 dargestellten Ausführungsbeispiel sind die Flanken 22 an ihrem radial äußeren Rand jeweils mit einer Flankenstruktur versehen, die jeweils beispielsweise durch eine Mehrzahl von Aussparungen 26 gebildet ist.

Der Ventileinsatz 18 kann insbesondere durch Klebung, Umspritzen, Verschweißen, Verrasten und/oder dergleichen fest mit dem Ventilkörper 12 fest verbunden sein. Wird der Ventilkörper 12 beispielsweise aus Kunststoff nach dem Kunststoffspritzverfahren hergestellt, so kann dieser Ventilkörper 12 insbesondere direkt um den Ventileinsatz 18 gespritzt werden. Durch die sich verjüngenden bzw. mit einer Struktur versehenen Flanken 22 des Fortsatzes 20 ergibt sich eine zuverlässige feste Verbindung des Ventileinsatzes 18 mit dem Ventilkörper 12.

Zumindest der Ventileinsatz 18 kann beispielsweise auch nach dem Fließpressverfahren hergestellt werden.

Die Werkzeugaufnahme 16 ist im vorliegenden Fall beispielsweise in Form eines sogenannten Phillips-Kreuzschlitzes vorgesehen. Grundsätzlich kann diese Werkzeugaufnahme 16 jedoch auch andersartig ausgestaltet sein. So kann sie beispielsweise anstatt in Form eines Kreuzschlitzes beispielsweise auch in Form eines Längsschlitzes, eines Innensechskants usw. vorgesehen sein.

Wie insbesondere wieder anhand der Fig. 1 zu erkennen ist, kann der Ventilkörper 12 mit einem Dichtring 28 zur Abdichtung der Hydraulikflüssigkeit nach außen und mit einem Sicherungsring 30 versehen sein, der insbesondere zur Verdrehsicherung beitragen kann.

Überdies ist der Ventilkörper 12 mit einem Außengewinde 32 versehen, das mit einem in einer Bohrung des Antriebsgehäuses vorgesehenen Innengewinde zusammenwirkt.

Fig. 4 zeigt das in eine Aufnahmebohrung 34 eines Antriebsgehäuses 36 eingebrachte Regulierventil 10 gemäß Fig. 1, wobei einander entsprechenden Teilen wieder gleiche Bezugszeichen zugeordnet sind.

Wie anhand dieser Fig. 4 zu erkennen ist, ist die Werkzeugaufnahme 16 des durch den Ventileinsatz 18 gebildeten Ventilkopfs 14 von außen zugänglich, so dass das Regulierventil 10 beispielsweise mittels eines Schraubendrehers oder dergleichen betätigt werden kann. In der Fig. 4 ist zudem ein Drosselspalt 38 zu erkennen, der durch Verdrehen des Regulierventils 10 variabel einstellbar ist. Dabei wird durch das mit einem Innengewinde des Antriebsgehäuses 36 zusammenwirkende Außengewinde 32 des Ventilkopfes 14 die Drehbewegung des Regulierventils 10 in einen axialen Hub umgewandelt.

### Bezugszeichenliste

- 10: Regulierventil
- 12: Ventilkörper
- 14: Ventilkopf
- 16: Werkzeugaufnahme
- 18: Ventileinsatz
- 20: Fortsatz
- 22: Flanke
- 24: Mittelachse
- 26: Aussparung
- 28: Dichtung
- 30: Sicherungsring
- 32: Außengewinde
- 34: Aufnahmebohrung
- 36: Antriebsgehäuse

## Patentansprüche

1. Regulierventil (10) für einen Antrieb insbesondere einer Tür oder eines Fensters, mit einem aus Kunststoff bestehenden Ventilkörper (12) und einem Ventilkopf (14), der mit einer Werkzeugaufnahme (16) für ein Werkzeug versehen ist, wobei der die Werkzeugaufnahme (16) umfassende Ventilkopf (14) durch einen mit dem Ventilkörper (12) fest verbundenen, aus Metall bestehenden Ventileinsatz (18) gebildet ist, **dadurch gekennzeichnet, dass** der Ventileinsatz (18) einen mit dem Ventilkopf (14) verbundenen, sich in den Ventilkörper (12) hinein erstreckenden axialen Fortsatz (20) umfasst, welcher axiale Fortsatz (20) des Ventileinsatzes (18) mehrere sich jeweils axial und radial erstreckende Flanken (22) umfasst.

2. Regulierventil nach Anspruch 1,
**dadurch gekennzeichnet, dass** die Flanken (22) kreuzförmig angeordnet sind.

3. Regulierventil nach Anspruch 1 oder 2,
**dadurch gekennzeichnet, dass** sich die Flanken (22) axial zum Ventilkopf (14) hin verjüngen.

4. Regulierventil nach einem der Ansprüche 1 bis 3,
**dadurch gekennzeichnet, dass** sich die Flanken (22) radial zur Mittelachse (24) des Regulierventils (10) hin verjüngen.

5. Regulierventil nach zumindest einem der vorstehenden Ansprüche,
**dadurch gekennzeichnet, dass** die Flanken an ihrem radial äußeren Rand jeweils mit einer Flankenstruktur versehen sind, wobei diese zur Bildung der Flankenstruktur an ihrem äußeren radialen Rand mit einer Mehrzahl von Aussparungen (26) versehen ist.

6. Regulierventil nach zumindest einem der vorstehenden Ansprüche,
**dadurch gekennzeichnet, dass** der Ventileinsatz (18) durch Klebung, Umspritzen, Verrasten und/oder dergleichen fest mit dem Ventilkörper (12) verbunden ist.

7. Regulierventil nach zumindest einem der vorstehenden Ansprüche,
**dadurch gekennzeichnet, dass** zumindest der Ventileinsatz (18) nach dem Fließpressverfahren hergestellt ist.

## Claims

1. Regulating valve (10) for a drive, in particular of a door or of a window, having a valve body (12) which consists of plastic and having a valve head (14) which is provided with a tool receptacle (16) for a tool, wherein the valve head (14) comprising the tool receptacle (16) is formed by a valve insert (18) which is firmly connected to the valve body (12) and which consists of metal, **characterized in that** the valve insert (18) comprises an axial extension (20) which is connected to the valve head (14) and which extends into the valve body (12), which axial extension (20) of the valve insert (18) comprises a plurality of flanks (22) which each extend axially and radially.

2. Regulating valve according to Claim 1,
**characterized in that** the flanks (22) are arranged in a cruciform manner.

3. Regulating valve according to Claim 1 or 2,
**characterized in that** the flanks (22) taper axially towards the valve head (14).

4. Regulating valve according to one of Claims 1 to 3,
**characterized in that** the flanks (22) taper radially towards the centre axis (24) of the regulating valve (10).

5. Regulating valve according to at least one of the preceding claims,
**characterized in that** the flanks are each provided at their radially outer edge with a flank structure, wherein, to form the flank structure, said flank is provided at its outer radial edge with a plurality of cutouts (26).

6. Regulating valve according to at least one of the preceding claims,
**characterized in that** the valve insert (18) is firmly connected to the valve body (12) by adhesive bonding, overmolding, latching and/or the like.

7. Regulating valve according to at least one of the preceding claims,
**characterized in that** at least the valve insert (18) is produced by the extrusion process.

## Revendications

1. Soupape de réglage (10) pour un entraînement notamment d'une porte ou d'une fenêtre, avec un corps de soupape (12) composé de matière plastique et avec une tête de soupape (14) pourvue d'un logement d'outil (16) pour un outil ;
la tête de soupape (14) comprenant le logement d'outil (16) étant formée par une garniture de soupape (18), reliée fixement au corps de soupape (12) et réalisée en métal, **caractérisée en ce que** la garniture de soupape (18) comprend un prolongement axial (20) relié à la tête de soupape (14) et s'étendant dans le corps de soupape (12), ledit prolongement axial (20) de la garniture de soupape (18) comprenant plusieurs flancs (22) s'étendant respectivement dans le plan axial et dans le plan radial.

2. Soupape de réglage selon la revendication 1, **caractérisée en ce que** les flancs (22) sont disposés en forme de croix.

3. Soupape de réglage selon la revendication 1 ou 2, **caractérisée en ce que** les flancs (22) se rétrécissent dans le plan axial en direction de la tête de soupape (14) .

4. Soupape de réglage selon l'une quelconque des revendications 1 à 3, **caractérisée en ce que** les flancs (22) se rétrécissent dans le plan radial en direction de l'axe central (24) de la soupape de réglage (10).

5. Soupape de réglage selon au moins l'une quelconque des revendications précédentes, **caractérisée en ce que** les flancs sont pourvus au niveau de leur bord extérieur dans le plan radial respectivement d'une structure de flanc, celle-ci étant pourvue d'une pluralité d'évidements (26) pour la formation de la structure de flanc au niveau de son bord radial extérieur.

6. Soupape de réglage selon au moins l'une quelconque des revendications précédentes, **caractérisée en ce que** la garniture de soupape (18) est reliée au corps de soupape (12) par collage, injection, encliquetage et/ou leur équivalent.

7. Soupape de réglage selon au moins l'une quelconque des revendications précédentes, **caractérisée en ce qu'**au moins la garniture de soupape (18) est fabriquée selon le procédé d'extrusion.
